# EUROPEAN PATENT APPLICATION

(11) **EP 2 517 818 A1**
(43) Date of publication of application: **31.10.2012**
(21) Application number: 10839069.1
(22) Date of filing: 28.10.2010
(51) Int. Cl.: B23K 26/38, B23K 26/14, B23K 26/40

(54) **CUTTING APPARATUS FOR FIBER-REINFORCED RESIN**

(30) Priority: 25.12.2009 JP 2009296154
(71) Applicant: Mitsubishi Heavy Industries, Ltd., Tokyo 108-8215 (JP)
(72) Inventor: FUJIYA, Yasuyuki, Tokyo 108-8215 (JP); KAWASETSU, Nozomu, Tokyo 108-8215 (JP); NAYAMA, Michisuke, Tokyo 108-8215 (JP); NOOKA, Satoru, Tokyo 108-8215 (JP); BABA, Tomoyoshi, Tokyo 108-8215 (JP)
(74) Representative: Henkel, Breuer & Partner
(86) International application number: PCT/JP2010/069173
(87) International publication number: WO 2011/077832

(57) **Abstract**

Disclosed is a cutting apparatus for a fiber-reinforced resin, which enables the reduction in processing cost and the prevention of the deterioration in quality of a cut surface. The cutting apparatus comprises a laser radiation unlit (10) from which a laser beam to be delivered to a fiber-reinforced fiber (2) to be cut is ejected in pulses and a cutting head (30) through which the laser beam ejected from the laser radiaction unit (10) is ejected to the fiber-reinforced resin (2), wherein the pulse width of the laser beam falls within the range from 1 fs to 999 ps inclusive and the relative moving speed of the cutting head (30) relative to the fiber-reinforced resin (2) is about 1.5 m/min or more.

## Description

### {Technical Field}

The present invention relates to cutting apparatuses suitable for use in cutting fiber-reinforced plastics, such as carbon-fiber-reinforced plastics.

### {Background Art}

In general, cutting methods such as laser cutting and water jet cutting are used for cutting a wide range of materials, including metal materials, ceramics such as stone, and fiber-reinforced plastics (hereinafter referred to as "FRP") (see, for example, PTL 1).

For example, water jet cutting and cutting by machining are commonly used for processing carbon-fiber-reinforced plastics (hereinafter referred to as "CFRP"), which are used for applications such as aircraft and ships.

### {Citation List}

### {Patent Literature}

### {PTL 1}

Publication of Japanese Patent No. 4038741

### {Summary of Invention}

### {Technical Problem}

Machining of CFRP, as described above, has a problem in that it involves high processing cost because carbon fiber, which is hard, shortens the life of tools such as blades. Another problem is that it requires a polishing step for removing carbon fiber burrs remaining on a processed surface.

Water jet cutting, on the other hand, has a problem in that it involves high processing cost because a water jet nozzle has a short life. Another problem is that it causes considerable noise and therefore requires paying consideration to the surrounding environment because of the need to drive, for example, a high-pressure pump for supplying high-pressure water used for cutting.

Processing of FRP by cutting using laser light (laser cutting) is also possible, although it has a problem in that it involves high processing cost. Specifically, laser cutting does not form an excellent cut surface because the effect of heat due to laser light is so large that a carbonized layer and a heat-affected layer form on the cut surface of FRP. Accordingly, treatment such as removing the carbonized layer and the heat-affected layer from the cut surface is needed, thus causing the problem of extremely high processing cost.

Another proposed method involves cutting a Kevlar-fiber-reinforced plastic (hereinafter referred to as "KFRP") with CO₂ laser light and removing a carbonized layer formed on the cut surface of KFRP with excimer laser light, although it has a problem in that it cannot remove the heat-affected layer. Another problem is that thick KFRP is difficult to cut because the limit of the thickness of KFRP that can be cut is low (for example, about 1 mm).

An object of the present invention, which has been made to solve the above problems, is to provide a cutting apparatus for fiber-reinforced plastics that reduces an increase in processing cost and also reduces a decrease in the quality of a cut surface.

### {Solution to Problem}

To achieve the above object, the present invention provides the following solutions.
A cutting apparatus of the present invention for fiber-reinforced plastics includes a laser emitter for emitting pulsed laser light for irradiation of a fiber-reinforced plastic to be cut and a cutting head for outputting the laser light emitted from the laser emitter toward the fiber-reinforced plastic, the laser light has a pulse width of no less than 1 fs and no more than 999 ps, and the moving speed of the cutting head relative to the fiber-reinforced plastic is about 1.5 m/min or more.

According to the present invention, the effect of heat on the cut surface of the fiber-reinforced plastic can be reduced by decreasing the pulse width of the laser light (to the order of fs to ps). Specifically, if the energy density of the laser light that irradiates the fiber-reinforced plastic is increased, the region of the fiber-reinforced plastic irradiated with the laser light is removed before the heat applied to the fiber-reinforced plastic travels into the surrounding portion. This avoids formation of a carbonized layer on the cut surface of the fiber-reinforced plastic and reduces the size of the region subjected to the effect of heat.

In addition, if the moving speed of the cutting head relative to the fiber-reinforced plastic, in other words, the speed at which the fiber-reinforced plastic is cut, is controlled to about 1.5 m/min, the effect of heat on the cut surface of the fiber-reinforced plastic can be further reduced. Specifically, as the moving speed of the region in which the fiber-reinforced plastic is being irradiated with the laser light becomes higher, the distance by which heat travels through the fiber-reinforced plastic in a direction crossing the cutting direction becomes shorter. This further reduces the effect of heat on the cut surface of the fiber-reinforced plastic.

In the above invention, preferably, the cutting apparatus further includes a supply unit for supplying a high-pressure liquid to the cutting head, and the cutting head includes a nozzle from which the liquid supplied from the supply unit is ejected toward the fiber-reinforced plastic and through which the laser light is guided.

According to the present invention, the liquid is ejected onto the region of the fiber-reinforced plastic irradiated with the laser light, namely, the cut surface. The ejected liquid then cools the region of the fiber-reinforced plastic in the vicinity of the cut surface, thus reducing the effect of heat on the cut surface of the fiber-reinforced plastic.

Because the high-pressure liquid and the laser light are coaxially ejected or output by the nozzle, the dimensional accuracy of the cut surface of the fiber-reinforced plastic can be increased. That is, the accuracy of the width over which the fiber-reinforced plastic is cut and the angle of the cut surface can be increased as compared with the case where the high-pressure liquid and the laser light are ejected or output in different directions.

On the other hand, because the high-pressure liquid is ejected onto the region being irradiated with the laser light, there is the added effect of removing the fiber-reinforced plastic by the high-pressure liquid. Accordingly, the efficiency with which the fiber-reinforced plastic is cut can be increased as compared with the case where the high-pressure liquid is not ejected.

For example, because the fiber-reinforced plastic is cut using both the laser light and the high-pressure liquid if the fiber-reinforced plastic is relatively thin, a liquid having a lower pressure can be used than in the case where the fiber-reinforced plastic is cut using the high-pressure liquid alone (for water jet cutting). This allows a reduction in the capacity of the supply unit for increasing the pressure of the liquid and eliminates the need for installing soundproofing equipment for insulating against noise emitted from the supply unit. In other words, the cost of cutting the fiber-reinforced plastic can be reduced.

If a liquid having a pressure comparable to that of a high-pressure liquid used alone for cutting (for water jet cutting) is used, thicker fiber-reinforced plastic can be cut by the cutting effect of the high-pressure liquid and the laser light than by a cutting method using either one of them.

### {Advantageous Effects of Invention}

The cutting apparatus of the present invention for fiber-reinforced plastics, in which the laser light has an average laser output power of about 400 W or more and a pulse width of no less than 1 fs and no more than 999 ps and the cutting speed is about 1.5 m/min or more, provides the advantage of reducing an increase in processing cost and also reducing a decrease in the quality of the cut surface.

### {Brief Description of Drawings}

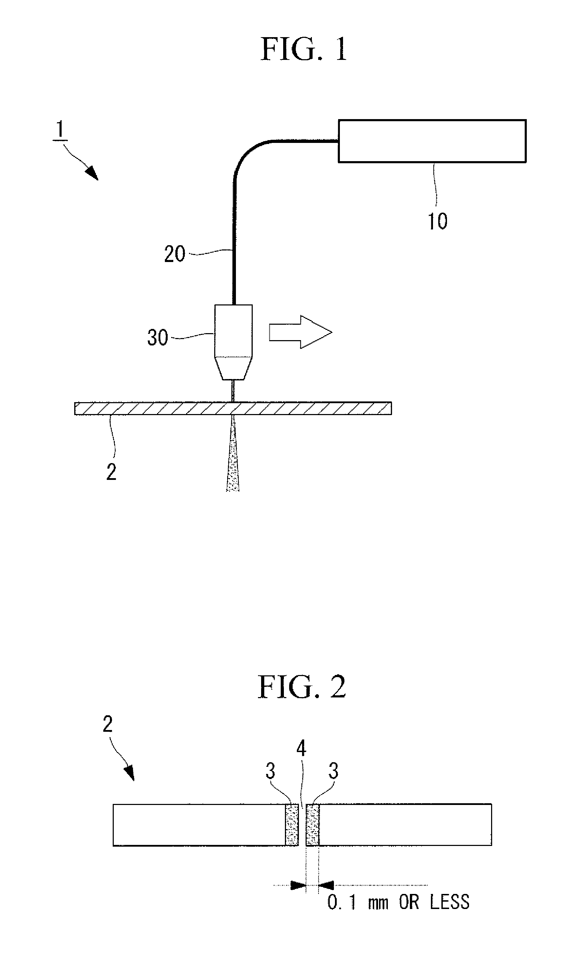

{Fig. 1}
   Fig. 1 is a schematic view illustrating, in outline, a cutting apparatus according to a first embodiment of the present invention.
{Fig. 2}
   Fig. 2 is a schematic view illustrating CFRP after cutting.
{Fig. 3}
   Fig. 3 is a graph illustrating the relationship between the average laser output power of laser light that irradiates CFRP and the speed at which the CFRP is cut.
{Fig. 4}
   Fig. 4 is a schematic view illustrating, in outline, a cutting apparatus according to a second embodiment of the present invention.
{Fig. 5}
   Fig. 5 is a schematic view illustrating the structure of a cutting head in Fig. 4.
{Fig. 6}
   Fig. 6 is a conceptual diagram of rough processing.
{Fig. 7}
   Fig. 7 is a conceptual diagram of rough processing.

### {Description of Embodiments}

### First Embodiment

A cutting apparatus according to a first embodiment of the present invention will be described below with reference to Figs. 1 to 3.
Fig. 1 is a schematic view illustrating, in outline, the cutting apparatus according to this embodiment.
A cutting apparatus 1 of this embodiment is used for cutting CFRP (fiber-reinforced plastic) 2 used as, for example, a material for aircraft or ships.
As shown in Fig. 1, the cutting apparatus 1 mainly includes a laser emitting device (laser emitter) 10, a light guide 20, and a cutting head 30.

The laser emitting device 10 emits pulsed laser light for irradiation of the CFRP 2.
In this embodiment, the laser emitting device 10 has an average laser output power of about 400 W or more, and the laser light emitted from the laser emitting device 10 has a pulse width on the order of fs to ps, preferably no less than 1 fs and no more than 999 ps, more preferably, no less than 100 fs and no more than 900 fs.

As shown in Fig. 1, the laser emitting device 10 has the light guide 20 connected thereto such that the laser light can propagate therethrough.
The laser emitting device 10 used can be a known one and is not particularly limited.

The light guide 20 guides the laser light emitted from the laser emitting device 10 to the cutting head 30. The light guide 20 has one end thereof connected to the laser emitting device 10 and the other end thereof connected to the cutting head 30.
The light guide 20 used can be a known transmission line such as an optical fiber for guiding laser light and is not particularly limited.

The cutting head 30 outputs the laser light toward the CFRP 2 and is moved relative to the CFRP 2. The cutting head 30 has the light guide 20 connected thereto such that the laser light can propagate therethrough.
In this embodiment, additionally, the cutting head 30 is movable relative to the CFRP 2. For example, a moving mechanism (not shown) that moves the cutting head 30 relative to the CFRP 2 at a speed of about 1.5 m/min or more is provided.

The structure of the cutting head 30 used can be a known structure for outputting laser light and is not particularly limited.
As long as the cutting head 30 and the CFRP 2 are movable relative to each other, the CFRP 2 may instead be movable relative to the cutting head 30, as opposed to this embodiment, and there is no particular limitation.

Next, the cutting of the CFRP 2 with the cutting apparatus 1 having the above configuration will be described. Here, the cutting of CFRP 2 having a thickness of about 5 mm will be described.
In the cutting of the CFRP 2 using the cutting apparatus 1, the laser emitting device 10 emits pulsed laser light having an average laser output power of about 400 W or more and a pulse width on the order of fs to ps.

The pulsed laser light enters the light guide 20, which guides it to the cutting head 30. The pulsed laser light guided to the cutting head 30 irradiates a cutting region in the CFRP 2 through the cutting head 30. At the same time, the cutting head 30 is moved relative to the CFRP 2 at a speed of about 1.5 m/min in a cutting direction.

Fig. 2 is a schematic view illustrating the CFRP after cutting.
The region of the CFRP 2 irradiated with the pulsed laser light is removed by the laser light. On the other hand, no carbonized layer forms because the amount of heat that travels into the portion of the CFRP 2 adjacent to the region irradiated with the laser light is small because of the short pulse width of the laser light, and as shown in Fig. 2, the thickness of a heat-affected layer 3 subjected to the effect of heat can be reduced to about 0.1 mm or less.

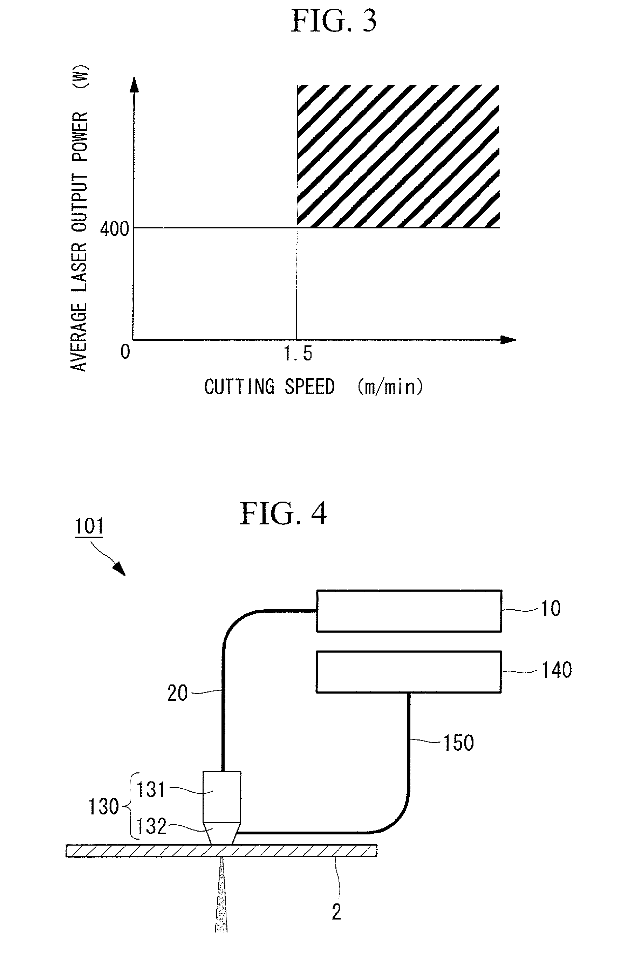

Fig. 3 is a graph illustrating the relationship between the average laser output power of the laser light that irradiates the CFRP and the speed at which the CFRP is cut.
As described above, to avoid formation of a carbonized layer on the cut surface of the CFRP 2 having a thickness of about 5 mm and to reduce the thickness of the heat-affected layer 3 to about 0.1 mm or less, as shown in Fig. 3, the average laser output power of the laser light for irradiation needs to be about 400 W or more, and the cutting speed needs to be about 1.5 m/min or more.

For example, if the cutting speed falls below about 1.5 m/min, the moving speed of the region in which the CFRP 2 is being irradiated with the laser light becomes lower. Accordingly, the distance by which heat travels through the CFRP 2 in a direction crossing the cutting direction becomes longer, and the heat-affected layer 3 becomes thicker. In addition, a carbonized layer might be formed.
On the other hand, if the average laser output power of the laser light falls below about 400 W, it might not be possible to cut the CFRP 2 because of the decreased ability of the laser light to remove the CFRP 2.

In the above configuration, the effect of heat on the cut surface of the CFRP 2 can be reduced by decreasing the pulse width of the laser light (to the order of fs to ps). Specifically, if the energy density of the laser light that irradiates the CFRP 2 is increased, the region of the CFRP 2 irradiated with the laser light is removed before the heat applied to the CFRP 2 travels into the surrounding portion. This avoids formation of a carbonized layer on the cut surface of the CFRP 2 and reduces the size of the region subjected to the effect of heat, namely, the heat-affected layer 3.

In other words, there is no need to remove a carbonized layer from the cut surface, thus reducing an increase in processing cost, and the heat-affected layer 3 can be reduced in size, thus reducing a decrease in the quality of the cut surface.

If the moving speed of the cutting head 30 relative to the CFRP 2, in other words, the speed at which the CFRP 2 is cut, is controlled to about 1.5 m/min or more, the heat-affected layer 3 on the cut surface of the CFRP 2 can be further reduced in size. Specifically, as the moving speed of the region in which the CFRP 2 is being irradiated with the laser light becomes higher, the distance by which heat travels through the CFRP 2 in a direction crossing the cutting direction becomes shorter. This further reduces the size of the heat-affected layer 3 on the cut surface of the CFRP 2, thus reducing an increase in processing cost and a decrease in the quality of the cut surface.

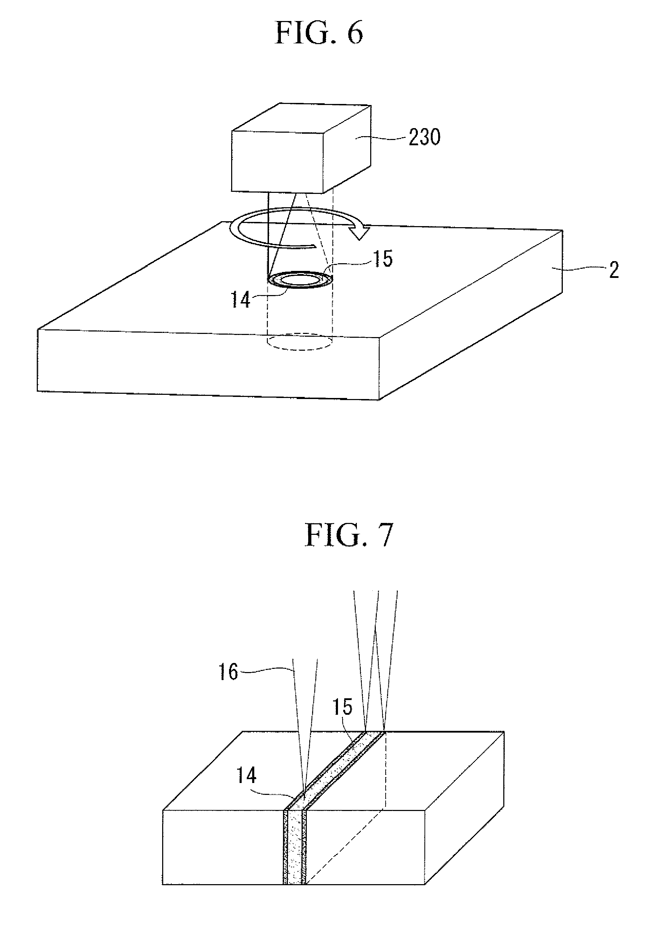

In this embodiment, a step of roughly processing a portion that may be subjected to the effect of heat may be added if a wide region is to be cut or perforated with the laser irradiation device. Figs. 6 and 7 show conceptual diagrams of rough processing. These figures illustrate a precisely processed region 14 where the CFRP 2 is processed by the cutting or perforation process according to this embodiment and a roughly processed region 15 where the CFRP 2 is roughly processed. Fig. 6 shows perforation, and Fig. 7 shows cutting.
Rough processing is performed with the processing speed and output power of laser light 16 for rough processing with which the CFRP 2 can be cut or perforated by a single irradiation (the output power level and processing speed of a known process). The portion that may be subjected to the effect of heat means the portion of the CFRP 2 located so far away from the final processed surface that the heat-affected portion formed by rough processing does not reach the final processed surface. By doing so, the cut CFRP 2 can be more easily removed from the processed portion. In addition, the cutting region defined taking into account the effect of heat can be reduced in size, thus allowing for a reduction in processing time.

### Second Embodiment

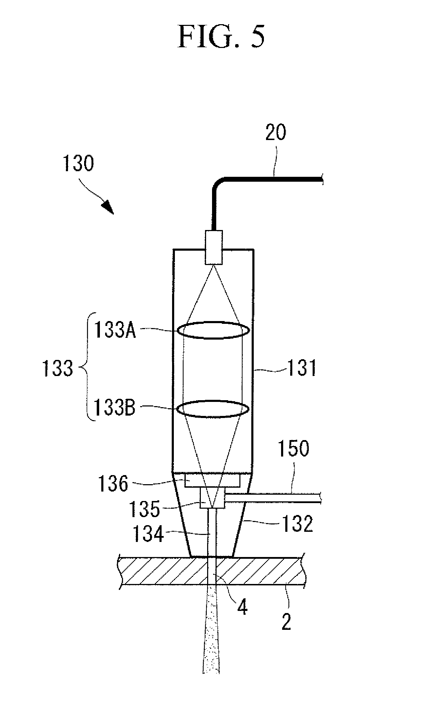

Next, a second embodiment of the present invention will be described with reference to Figs. 4 and 5.
The basic configuration of a cutting apparatus of this embodiment is similar to that of the first embodiment, although it differs from the first embodiment in that pressurized water is used for cutting in addition to laser light. In this embodiment, therefore, only the configuration relevant to cutting using laser light and pressurized water will be described with reference to Figs. 4 and 5, and a description of other components etc. is omitted.
Fig. 4 is a schematic view illustrating, in outline, the cutting apparatus according to this embodiment. Fig. 5 is a schematic view illustrating the structure of a cutting head in Fig. 4.
The same components as in the first embodiment are denoted by the same reference signs, and a description thereof is omitted.

As shown in Fig. 4, a cutting apparatus 101 mainly includes a laser emitting device 10, a light guide 20, a high-pressure-water supply device (supply unit) 140, a water supply channel 150, and a cutting head 130.

The high-pressure-water supply device 140 supplies pressurized water (liquid) to the cutting head 130. The water supply channel 150 is connected to the high-pressure-water supply device 140 such that the water pressurized to high pressure can flow therethrough.
In this embodiment, the case where the high-pressure-water supply device 140 is one that supplies water pressurized to a pressure in the range of several MPa to several hundreds of MPa will be described.
The high-pressure-water supply device 140 used can be a known one such as a pump for pressurizing water and is not particularly limited.

The water supply channel 150 guides the water pressurized by the high-pressure-water supply device 140 to the cutting head 130. The water supply channel 150 has one end thereof connected to the high-pressure-water supply device 140 such that the high-pressure water can flow therethrough and the other end thereof connected to a nozzle 132 of the cutting head 30 such that the high-pressure water can flow therethrough.
The water supply channel 150 used can be a known one such as a pressure hose and is not particularly limited.

The cutting head 130 outputs the laser light and ejects the high-pressure water toward the CFRP 2. As with the cutting head 30 in the first embodiment, the cutting head 130 is movable relative to the CFRP 2.
As shown in Fig. 5, the cutting head 130 mainly includes a lens housing 131 and the nozzle 132.

The lens housing 131 forms the cutting head 130 together with the nozzle 132.
The lens housing 131 is a substantially cylindrical member having one end thereof closed off, with the nozzle 132 connected to an open end thereof such that the laser light enters the nozzle 132. Meanwhile, the light guide 20 is connected to the closed end of the lens housing 131 such that the laser light enters the lens housing 131.

A lens system 133 is disposed in the lens housing 131 to focus the laser light incident from the light guide 20 in a nozzle orifice 134 in the nozzle 132.
In this embodiment, the case where the lens system 133 is composed of a first lens 133A for converting the laser light output from the light guide 20 into parallel light and a second lens 133B for focusing the laser light converted into parallel light in the nozzle orifice 134 will be described.

The nozzle 132 irradiates the CFRP 2 with the laser light incident from the lens housing 131 and ejects the high-pressure water toward the CFRP 2.
The nozzle 132 mainly includes the nozzle orifice 134, an inflow portion 135, and a light guide window 136.

The nozzle orifice 134 guides the laser light and the high-pressure water toward the CFRP 2. The nozzle orifice 134 is a through-hole formed in the nozzle 132 and has one end thereof open at the end of the nozzle 132 and the other end thereof open in the inflow portion 135.
The inner circumferential surface of the nozzle 132 is coated with gold.

The inflow portion 135 is a space into which the high-pressure water supplied from the water supply channel 150 flows and through which the high-pressure water is guided to the nozzle orifice 134. The inflow portion 135 is also an optical path through which the laser light incident from the lens housing 131 passes before entering the nozzle orifice 134.

The water supply channel 150 and the nozzle orifice 134 are connected to the inflow portion 135 such that the high-pressure water can flow therethrough, and the light guide window 136 is disposed adjacent thereto. Specifically, the light guide window 136, the inflow portion 135, and the nozzle orifice 134 are arranged in order along the optical axis of the laser light and in the direction in which the laser light travels. The water supply channel 150 is connected in a direction crossing the optical axis of the laser light.

The light guide window 136 is a component that the laser light enters from the lens housing 131 and that forms the space in the inflow portion 135.
The light guide window 136 is a plate-shaped member formed of a material transparent to the laser light and having a strength sufficient to resist the pressure of the high-pressure water. One of the surfaces of the light guide window 136 forms a portion of the surface of the nozzle 132 adjacent to the lens housing 131, whereas the other surface forms a portion of the inner surface of the inflow portion 135.

Next, the cutting of the CFRP 2 with the cutting apparatus 101 having the above configuration will be described.
In the cutting of the CFRP 2 using the cutting apparatus 101, as shown in Fig. 4, the laser emitting device 10 emits pulsed laser light, as in the first embodiment.

As shown in Fig. 5, the pulsed laser light enters the lens housing 131 of the cutting head 130 through the light guide 20. The laser light exits from the end of the light guide 20 while diverging and enters the first lens 133A. The laser light exits the first lens 133A while being converted into parallel light and enters the second lens 133B. The laser light is focused toward the nozzle orifice 134 by the second lens 133B.

The laser light exiting the second lens 133B passes through the light guide window 136 and the inflow portion 135 to enter the nozzle orifice 134. The laser light entering the nozzle orifice 134 is guided toward the CFRP 2 while being reflected by the inner circumferential surface of the gold-coated nozzle orifice 134. The laser light guided through the nozzle orifice 134 is output from the end of the nozzle orifice 134 opposite the CFRP 2 toward the CFRP 2.

Meanwhile, as shown in Figs. 4 and 5, the high-pressure-water supply device 140 pressurizes water to a pressure in the range of several MPa to several hundreds of MPa, and the water pressurized to high pressure is supplied through the water supply channel 150 to the nozzle 132 of the cutting head 130.

The high-pressure water flows into the inflow portion 135 of the nozzle 132 and then flows from the inflow portion 135 into the nozzle orifice 134. The high-pressure water flowing into the nozzle orifice 134 is guided through the nozzle orifice 134 toward the CFRP 2 and is ejected onto the CFRP 2.
The laser light and the high-pressure water are guided toward the CFRP 2 through the same path, in other words, coaxially, in the region from the inflow portion 135 to the nozzle 132.

The high-pressure water ejected from the nozzle orifice 134 flows into a cut hole 4 formed in the CFRP 2. At this time, if the nozzle 132 is disposed in proximity to the CFRP 2, the ejected high-pressure water is prevented from splashing. By preventing the high-pressure water from splashing, the laser light irradiating the CFRP 2 can be prevented from scattering, thus reliably irradiating the inner surface of the cut hole 4.

In the above configuration, the high-pressure water is ejected onto the region of the CFRP 2 irradiated with the laser light, namely, the cut hole 4. The ejected high-pressure water then cools the region of the CFRP 2 in the vicinity of the cut hole 4, thus reducing the effect of heat on the cut surface of the CFRP 2.

Because the high-pressure water and the laser light are coaxially ejected or output by the nozzle 132, the dimensional accuracy of the cut surface of the CFRP 2 can be increased. That is, the accuracy of the width over which the CFRP 2 is cut and the angle of the cut surface can be increased as compared with the case where the high-pressure water and the laser light are ejected or output in different directions.

On the other hand, because the high-pressure water is ejected onto the region being irradiated with the laser light, there is the added effect of removing the CFRP 2 by the high-pressure water. Accordingly, the efficiency with which the CFRP 2 is cut can be increased as compared with the case where the high-pressure water is not ejected.

For example, because the CFRP 2 is cut using both the laser light and the high-pressure water if the CFRP 2 is relatively thin, water having a lower pressure can be used than in the case where the CFRP 2 is cut using the high-pressure water alone (for water jet cutting). This allows a reduction in the capacity of the high-pressure-water supply device 140 for increasing the pressure of the water and eliminates the need for installing soundproofing equipment for insulating against noise emitted from the high-pressure-water supply device 140. In other words, the cost of cutting the CFRP 2 can be reduced.

If water having a pressure comparable to that of high-pressure water used alone for cutting (for water jet cutting) is used, thicker CFRP 2 can be cut by the cutting effect of the high-pressure water and the laser light than by a cutting method using either one of them.

The technical scope of the present invention is not limited to the above embodiments; various modifications can be added without departing from the spirit of the present invention.
For example, while the case where the invention is applied to the cutting apparatus 1 for cutting the CFRP 2 has been described in the above embodiment, the application is not limited to the cutting apparatus 1 for cutting the CFRP 2; it may be applied to cutting apparatuses for cutting various other FRPs, such as KFRP, and there is no particular limitation.

### {Reference Signs List}

- 1, 101: cutting apparatus
- 2: CFRP (fiber-reinforced plastic)
- 10: laser emitting device (laser emitter)
- 30, 130: cutting head
- 140: high-pressure-water supply device (supply unit)

## Claims

1. A cutting apparatus for fiber-reinforced plastics, comprising:
a laser emitter for emitting pulsed laser light for irradiation of a fiber-reinforced plastic to be cut; and
a cutting head for outputting the laser light emitted from the laser emitter toward the fiber-reinforced plastic,
the laser light having a pulse width of no less that 1 fs and no more that 999 ps,
the moving speed of the cutting head relative to the fiber-reinforced plastic being about 1.5 m/min or more.

2. The cutting apparatus for fiber-reinforced plastics according to Claim 1, further comprising a supply unit for supplying a high-pressure liquid to the cutting head,
the cutting head including a nozzle from which the liquid supplied from the supply unit is ejected toward the fiber-reinforced plastic and through which the laser light is guided.
